# EUROPEAN PATENT APPLICATION

(11) **EP 4 748 277 A1**
(43) Date of publication of application: **27.05.2026**
(21) Application number: 25217556.7
(22) Date of filing: 21.11.2025
(51) Int. Cl.: A47J 27/00, A47J 36/02, B21D 51/22

(54) **A COATING - FREE NON - STICK PAN AND ITS PREPARATION METHOD**

(30) Priority: 26.11.2024 CN 202411701290
(71) Applicant: ZHEJIANG JIUKANG ELECTRIC APPLIANCES CO., LTD., Jiaxing Zhejiang 314312 (CN)
(72) Inventor: XU, Jiedong, Jiaxing, 314312 (CN); WANG, Huaqin, Jiaxing, 314312 (CN)
(74) Representative: Gong, Jinping

(57) **Abstract**

A coating-free non-stick pan features a uniform distribution of micro-nano concave-convex structures on the surface of the pan body. The micro-nano concave-convex structures include micro-nano protrusions or micro-nano depressions. The micro-nano protrusions are particle films formed by particles, with the thickness of the particle film ranging from 0.1 to 0.98 µm, and the size of the particles forming the particle film being 0.02 to 0.3 µm. The diameter of the micro-nano depressions includes densely distributed depressions of 0.1 to 0.98 µm.The pan is equipped with micro-nano concave-convex structures with multi-level diameter sizes. The diameter of the micro-nano depressions further includes 40±20 µm and 5±2 µm. The micro-nano depressions are processed and prepared by pressing or corrosion methods, with a depth ranging from 20 to 1500 nm.

## Description

### Technical Field

The present invention relates to the preparation of a cooking utensil, that is, a pan, and in particular, to a preparation method of a coating - free non - stick pan.

### Background Art

In the existing technology, for the non - stick pan with a honeycomb network structure on the surface, the honeycomb holes are relatively large, with a pore size of more than 3 mm. The bottom of the honeycomb holes is also coated, and the coating area is generally relatively large, accounting for about 80 - 90% of the surface area of the substrate. Therefore, the contact area between the coating and the food is also large, resulting in a large friction surface with the food, and also restricting the use of the spatula.

There are also cookware with nanoscale pores in the existing technology. The nanoscale pores will absorb air and oil during actual use, and will generate hot air and oil mist during the heating process, while holding up the food. Combined with the fluffy effect achieved by the aforementioned papilla structure, the friction force between the food and the inner surface of the pan is reduced. Without adding a chemical coating, the non - stick effect is achieved by physical means, making the food cooking of consumers healthier. If the plate material forming the pan body is titanium metal, a titanium dioxide hardened layer with a Vickers hardness not lower than HV600 will be generated on its surface after micro - arc oxidation; if the plate material forming the pan body is aluminum alloy, an aluminum oxide hardened layer with a Vickers hardness not lower than HV1000 will be generated on its surface after micro - arc oxidation. The plate material is an aluminum plate, a titanium plate or a magnesium plate; the surface of the plate material etched or stamped with shallow pits is aluminum, magnesium or titanium. However, this material has no advantages in application.

The applicant of the present invention has applied for a non - stick pan, which includes a coating - free pan body. The pan body (with a thickness of more than 1 mm) has evenly distributed concave holes on the food - contacting surface of the metal (with a thickness of more than 1 mm) pan body. The pore size of the concave holes is 0.1 - 0.5 mm, especially 0.3 - 0.5 mm, the spacing between the edges of the holes is 0.3 - 2 mm, the hole depth is 0.1 - 0.3 mm, especially 0.1 - 0.15 mm, and the area of the holes accounts for 15 - 40% of the total area of the pan body. The concave holes are circular or polygonal, and the concave holes are gradually recessed from the plane. The metal used is iron, stainless steel, etc.

### Existing Non-stick Technologies and Their Limitations

Current non-stick cookware features an inner surface with periodic microstructures, such as protrusions and/or pits ranging from a few micrometers to tens of micrometers. However, these microstructures have significant drawbacks:
1. Insufficient Size: The small dimensions fail to achieve optimal non-stick performance.
2. Durability Issues: Physical non-stick layers alone cannot withstand prolonged friction from cooking utensils, leading to rapid wear and loss of non-stick properties over time.
3. Missing Nanostructures: Existing technologies lack a combination of macro-pores (1mm or larger) and nano-scale pores. which are critical for enhancing non-stick capabilities.

Prior Art by the Applicant (CN2024101740492): Our earlier patent introduces a coating-free non-stick pan with concave structures formed via plasma carburizing:
Process Parameters: Temperature: 350-900°C, Gas Ratio: Argon:Methane = 50-95%:50-5%,
Treatment Time: 2-10 hours; Limitation: This method produces only macro-pores: the fabrication of nano-scale pores was not disclosed.

### Comparative Technology (CN2018218068341)

This patent discloses a cookware with a quasicrystalline coating deposited by magnetron sputtering or multi-arc ion plating:
- Coating Process:
   ∘ Magnetron Sputtering: Argon ions bombard a target under negative bias, ejecting atoms that deposit on the substrate.
   ∘ Multi-Arc Ion Plating: Arc discharge vaporizes and ionizes the target material, forming a dense coating on the substrate.
- Advantages: The quasicrystalline coating offers high density, good thermal conductivity, hardness, corrosion resistance, and a smooth surface for enhanced non-stick performance and easy cleaning.

### Innovation of the Present Invention

Unlike prior art that relies on dense coatings, our invention utilizes the inherent "microdroplet" structure produced by multi-arc ion plating:
- Key Difference: Instead of eliminating surface particles, we directly utilize the granular film structure to create a hierarchical surface with:
   ∘ Macro-pores (1mm scale)
   ∘ Micro-particles (micrometer scale)
   ∘ Nano-scale roughness (inherent to the particle morphology)
- Benefits:
   ∘ Enhanced non-stick performance through multi-scale surface topography.
   ∘ Improved durability due to strong bonding between the particle film and substrate.
   ∘ Simplified manufacturing process without post-treatment steps.

This approach represents a significant advancement over existing technologies by integrating macro, micro, and nano-scale structures for superior and long-lasting non-stick properties.

### Summary of the Invention

To solve the above problems, the object of the present invention is to provide a coating-free non-stick pan and a preparation method thereof, in particular to a low-cost pressed non-stick pan.

### Technical Solution

In order to achieve the above object, the technical scheme of the present invention is a coating-free non-stick pan, characterized in that:
- The surface of the pan body is uniformly distributed with micro-nano concave-convex structures, including micro-nano protrusions or micro-nano depressions. The micro-nano protrusions are particle films formed by particles, with a thickness of 0.1-0.98 µm and particle sizes of 0.02-0.3 µm. The diameter of the micro-nano depressions includes densely distributed depressions of 0.1-0.98 µm.
- The micro-nano concave-convex structures have multi-level (multiple) diameter sizes.
   The diameter of the micro-nano depressions further includes 40±20 µm and 5±2 µm, which are prepared by methods such as pressing or etching. The depth of the micro-nano depressions is 20-1500 nm.

- When the micro-nano protrusions adopt a particle film coating, the diameter of the micro-nano particles forming the particle film is particularly 20-300 nm.
- The pore diameter distribution of the micro-nano depressions is as follows (at least including particles with a size of 0.2±0.1 µm): 40±20 µm, 5±2 µm, 5±2 µm, and 0.2±0.1 µm.
- The pan body is made of stainless steel, titanium, or iron. The food-contact surface of the pan body is also provided with uniformly distributed composite multi-size concave holes, with the following parameters:
   ∘ Pore diameter: 0.1-0.8 mm (especially 0.3-0.5 mm)
   ∘ Spacing between hole edges: 0.3-2 mm
   ∘ Hole depth: 0.05-0.3 mm
   ∘ Hole area ratio: 15-40% of the total pan body area
   ∘ Shape: Circular or polygonal, gradually recessed from the plane.
- The food-contact surface of the pan body is provided with uniformly distributed concave holes of two or more pore diameters:
   o First-type holes: Pore diameter 0.3-0.8 mm, spacing between hole centers 0.6-8 mm
   ∘ Second-type holes: Pore diameter 0.05-0.29 mm, spacing between hole centers 0.1-0.9 mm
   ∘ Hole depth: 0.05-0.3 mm

### Preparation Method of the Coating-free Non-stick Pan

The micro-nano depressions are prepared by mechanical rolling with a rolling wheel or planar pressing (the mechanical rolling can also be a pressing plate for mechanical pressing), combined with multi-size hard particles (such as carborundum). The hard particles have at least two particle size distributions (D50): 50±20 µm, 5±2 µm, and 0.2±0.1 µm (at least including 0.2±0.1 µm particles), which are made into a mixed slurry in proportion. By applying pressure with the rolling wheel, the surface of the metal plate is rolled, and the metal plate is processed into a pan body (blank plane) after rolling. The hard particles are carborundum, boron carbide, silicon carbide, silicon nitride, boron nitride, or various corundums.

The mechanical rolling or pressing method is adopted, particularly with a mechanical rolling wheel (mechanical rolling can also use a pressing plate for mechanical pressing), combined with multi-size hard particles (such as carborundum). The particles have at least two particle size distributions (D50): 50±20 µm, 5±2 µm, and 0.2±0.1 µm (at least including 0.2±0.1 µm particles), which are made into a mixed slurry in a certain proportion. By adjusting the pressure of the rolling wheel, the surface of the metal plate is rolled, and the metal plate is processed into a pan body after rolling.
- Rolling Wheel Operation:
   Each mechanical rolling wheel uses a narrow wheel (e.g., 10-30 cm wide) to apply to the metal surface to be pressed, forming an indentation with a width of 10-30 cm per wheel. Multiple rolling wheels arranged in sequence are used to press the entire width of the metal plate.
- Multi-pass Rolling:
   Rolling can be performed in multiple passes (preferably using fine abrasives for subsequent passes). The concave holes on the pan body are separately pressed.
- Surface Structure Formation:
   This process enables the metal surface to form a micro-nano concave-convex (depression) structure with composite multi-size distribution, i.e., millimeter-scale concave holes superimposed on a micron-scale concave-convex surface. The micron-scale ranges from 0.2 µm to 0.1 mm, and the nano-scale ranges from 10 nm to 150 nm.
- Hard Particle Slurry:
   The multi-size hard particles (e.g., carborundum, boron carbide, silicon carbide, silicon nitride, boron nitride, various corundums) are mixed as a paste or suspended in water/oil as a carrier. The volume ratio of hard particles can be 8%-30%.
- Micro-nano Protrusion Coating:
   The micro-nano protrusions adopt a particle film coating structure, preferably formed by multi-arc ion plating. The diameter of micro-nano particles forming the particle film is 20-300 nm. Smooth films without particles are not required by the present invention.
- Pan Body Fabrication:
   The uniform micro-nano concave-convex structure on the pan body surface is constructed by processing multi-level micro-nano depressions, achieving non-stick performance of the metal pan body without chemical organic coatings or modifications. For preparing the coating-free pressed non-stick pan:
   ∘ The inner surface of the pan body is pressed with an alloy mold featuring uniform circular convex heads (matching the pan size and concave shape) to form concave holes on titanium plates.
   ∘ Austenitic titanium, martensitic stainless steel, titanium plates, or iron plates can be pressed to form the concave pan body.
- Safety Advantages:
   Even during high-temperature stir-frying or empty burning, the coating-free non-stick pan releases no toxic substances or gases, ensuring no pollution to cooked food or the kitchen environment, thus enhancing cooking safety.

### Beneficial Effects

The micro-nano surface treated by the present invention has excellent hardness and toughness. The oil and liquid retained in the micro-nano structure evaporate when heated, lifting the food to be heated. The concave-convex metal particles exhibit excellent non-stick properties, and the particle film formed by ion plating has strong adhesion to the pan surface. The micro-nano structure improves the slipperiness of the inner surface of the pan, reducing the friction between food and the pan, making it smoother to stir-fry dishes (even with hard spatulas). The non-stick effect basically reaches the level of new PTFE Teflon coatings, while the manufacturing cost is low.

By superimposing uniform intervals of millimeter or micron-scale concave holes (one or two types), the gas evaporated during food heating can more easily bulge out through the concave holes during general frying (with better effects when the pan or spatula is moved), and the concave holes account for 15%-40% of the pan body area. These features and advantages will be disclosed in detail in the following specific embodiments and accompanying drawings.

### Description of the Drawings

The present invention is further illustrated with the accompanying drawings:
- Fig. 1 is a schematic diagram of the concave hole distribution in the pan body of the embodiment of the present invention.

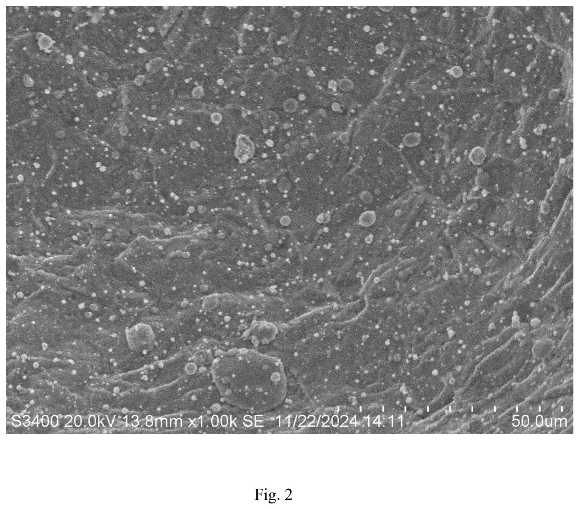

- Fig. 2 is a microscope photograph of the concave holes after preparation, showing a schematic image after composite multi-scale micro-nano processing.

### Specific Embodiments

The embodiments of the present invention are described in detail below, and examples of the embodiments are shown in the accompanying drawings, in which the same or similar reference numerals represent the same objects throughout.

The micro-nano protrusion structure on the pan surface adopts a particle film structure, which is plated onto the pan body surface, particularly by multi-arc ion plating: a high current is passed through the arc target, an arc is ignited by an arc starter, and the arc temperature melts the target material. By applying a bias voltage to the product, the melted target material is deposited on the product.
- Parameters of the micro-nano particle film:
   ∘ Thickness: 100-980 nm (particularly 150-700 nm).
   ∘ Diameter of micro-nano particles: 20-300 nm.
- Advantages of multi-arc ion plating:
   Passing a high current through the arc target and igniting an arc with an arc starter generates a high-temperature arc that melts the target material. Under bias voltage, the melted material deposits on the product. In the embodiment, the target material easily produces particles with a diameter of about 100 nm (main distribution), and large particles can exceed 200 nm, which is related to the target material, current, temperature, and atmosphere control.

### Coating-free Non-stick Pan Technology Translation

### Multi-arc Ion Plating and Film Materials

The micro-nano particle film prepared by multi-arc ion plating is made of metals such as chromium, nickel, titanium, zirconium, or their alloys, as well as coatings like CrN and TiN, which can be achieved by selecting target materials or adjusting the working atmosphere. Micro-nano particle films can also be generated by magnetron sputtering or cathode plating under extreme conditions.
- Magnetron Sputtering Process:
   Argon is introduced into a vacuum chamber, and a negative bias is applied to the magnetron sputtering target. Argon ions bombard the target surface under an electric field, sputtering film atoms that partially ionize during migration to the workpiece. Accelerated by the negative bias on the substrate, these ions deposit into a film. However, extreme conditions are required to achieve the particle film consistency of multi-arc ion plating.

### Micro-nano Concave-convex Structure Fabrication

The micro-nano concave-convex structure on the pan body is processed by mechanical rolling or pressing, especially using a mechanical rolling wheel or applying a hard particle paste to the metal plate. The particle size distribution of the paste includes at least two or three particle sizes (D50): 50±20 µm, 5±2 µm, and 0.2±0.1 µm (at least including 0.2±0.1 µm particles), mixed into a slurry in a certain proportion. The mass of two or three particle sizes can be basically the same, or the mass of small-size particles can be 100-200% of large-size particles.
- Rolling Operation:
   ∘ Adjust the rolling wheel pressure and roll the metal plate surface. After rolling, the plate is formed into a pan body.
   ∘ Each mechanical rolling wheel uses a narrow wheel (e.g., 10-30 cm wide) to create 10-30 cm wide indentations on the metal surface.
   ∘ Rolling wheels are arranged in sequence (staggered or ordered), with pressure applied via hydraulic or other means. For example, 8 wheels each 30 cm wide can continuously press a 2.4 m wide metal plate. After pressing, the mixed slurry is collected (by scraping) and the plate is cleaned.
- Slurry Composition:
   The multi-size hard particles (e.g., carborundum, boron carbide, silicon carbide, silicon nitride, boron nitride, corundums, cerium salts with Ce⁴⁺ ions, and oxidants) are mixed into a slurry. Besides hard particles, the slurry preferably contains amino carboxylic acids, PEG (or polyvinyl alcohol), and >40wt% water, stirred into a paste.

### Multi-step Processing and Alternative Methods

- Multi-pass Rolling: Rolling can be performed in multiple passes (preferably with fine abrasives for subsequent passes).
- Etching Method: Micro-nano depressions can also be formed by screen-printing photoresist, followed by cleaning and etching with a corrosive solution.
- Surface Structure Formation:
   The process creates a micro-nano concave-convex structure with composite multi-size distribution, where micron-scale concavities (0.2 µm to 0.1 mm) are superimposed with nano-scale features (10 nm to 200 nm).

### Concave Hole Design and Distribution

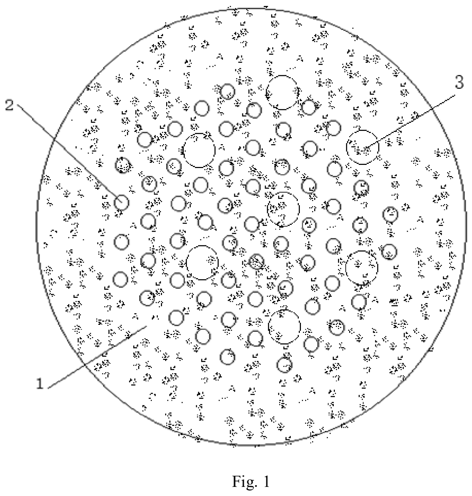

- Macro-concave Holes (Fig. 1):
   ∘ Type 1 holes: Diameter 0.3-0.8 mm (preferably 0.3-0.5 mm), spacing between centers 0.6-8 mm.
   ∘ Type 2 holes: Diameter 0.05-0.29 mm, spacing between centers 0.1-0.9 mm.
   ∘ Hole depth: 0.05-0.3 mm for both types.
   ∘ Hole area ratio: 15-40% of the pan body surface, ensuring both non-stick performance and durability.
   ∘ Shape: Circular or polygonal, gradually recessed from the plane.
- Material and Composite Structure:
   The food-contact layer is made of iron, titanium, stainless steel, etc., with aluminum layers possibly composite on the back of titanium or stainless steel plates.

### Surface Modification and Performance

- Roughness and Non-stick Property: Surface modification via micro-nano processing creates a composite multi-size structure, improving non-stick performance.
- Testing Standard: The non-stick performance meets Grade 1 of Chinese National Standard GB/T 32095.2-2015 for cookware.

Preparation Method of the Coating-free Pressed Non-stick Pan.The millimeter-scale concave holes are prepared by pressing a titanium plate with an alloy mold featuring uniform circular convex heads (matching the size and concave shape of the pan body) using a press. The coating-free pressed non-stick pan is formed by pressing austenitic titanium or martensitic titanium plates into a concave pan body.

Safety Advantages.Even during high-temperature stir-frying or empty burning, the coating-free pressed non-stick pan releases no toxic substances or gases, ensuring no pollution to cooked food or the kitchen environment, thus enhancing cooking safety.

Surface Processing Steps.The micro-nano surface treatment forms a composite multi-size micro-nano structure on the metal surface.
- Based on the above micro-nano processing, concave holes are further fabricated.

### Concave Hole Parameters. Diameter: 200, 300, 400, or 500 µm.

- Surface width between holes: 100-400 µm.
- Fabrication method: Pressed or etched by a hard alloy mold via pressure equipment, resulting in both concave holes and the pan body being in a hardened layer structure.
- Spacing between hole centers: 0.6-2 mm (edge spacing between adjacent holes: 0.3-1.8 mm).
- Depth: Particularly 0.05-0.18 mm.

Hole Shape and Structure: Shape: Circular or polygonal (polygonal concave holes are prepared with uniform polygonal convex heads on the mold).Profile: Gradually recessed from the plane.

Pan Body Fabrication: The pan body plate is formed into a concave shape by pressing a flat plate with hydraulic press equipment. A pan handle can be welded to the pan body.

Legal Statement: Although the embodiments of the present invention have been shown and described above, it should be understood that these embodiments are exemplary and should not be construed as limiting the invention. Those of ordinary skill in the art can make changes, modifications, substitutions, and variations to the above embodiments within the scope of the present invention without departing from its principles and objectives.

## Claims

1. A Coating-free Non-stick Pan, It is **characterized in that** the surface of the pan body is uniformly distributed with micro-nano concave-convex structures, including micro-nano protrusions or micro-nano depressions. The micro-nano protrusions are particle films formed by particles, with a thickness of 0.1-0.98 µm, and the particle size of the particle film is 0.02-0.3 µm. The diameter of the micro-nano depressions includes densely distributed depressions of 0.1-0.98 µm.

2. The Coating-free Non-stick Pan According to Claim 1, It is **characterized in that** it is provided with micro-nano concave-convex structures of multi-level diameter sizes. The diameter of the micro-nano depressions further includes 40±20 µm and 5±2 µm. The micro-nano depressions are prepared by pressing or corrosion methods, with a depth of 20-1500 nm.

3. The Coating-free Non-stick Pan According to Claim 1, It is **characterized in that** when the micro-nano protrusion structure adopts a particle film coating, the diameter of the micro-nano particles forming the micro-nano particle film is 20-300 nm.

4. The Coating-free Non-stick Pan According to Claim 1, It is **characterized in that** the pore diameter distribution of the micro-nano depression structure is as follows: 40±20 µm, 5±2 µm, 5±2 µm, and 0.2±0.1 µm.

5. The Coating-free Non-stick Pan According to Claims 1-4, It is **characterized in that** the pan body is made of stainless steel, titanium, or iron. The food-contact surface of the pan body is also provided with uniformly distributed composite multi-size concave holes, with the following parameters:
• Pore diameter: 0.1-0.8 mm (especially 0.3-0.5 mm)
• Spacing between hole edges: 0.1-2 mm
• Hole depth: 0.01-0.3 mm
• Hole area ratio: 15-40% of the total pan body area
• Shape: Circular or polygonal, with the concave holes gradually recessed from the plane.

6. The Coating-free Non-stick Pan According to Claim 5, It is **characterized in that** the food-contact surface of the pan body is provided with uniformly distributed concave holes of two or more pore diameters:
• First-type concave holes: Pore diameter 0.3-0.8 mm, spacing between hole centers 0.6-8 mm
• Second-type concave holes: Pore diameter 0.05-0.29 mm, spacing between hole centers 0.1-0.9 mm
• Hole depth: 0.01-0.3 mm

7. The Preparation Method of the Coating-free Non-stick Pan According to Any One of Claims 1-8, It is **characterized in that** the micro-nano depressions are prepared by mechanical rolling with a rolling wheel or planar pressing, combined with multi-size hard particles. The hard particles have at least two particle size distributions (D50): 50±20 µm, 5±2 µm, and 0.2±0.1 µm, which are made into a mixed slurry in proportion. By applying pressure with the rolling wheel, the surface of the metal plate is rolled, and the metal plate is processed into a pan body after rolling. The hard particles are carborundum, boron carbide, silicon carbide, silicon nitride, boron nitride, or various corundums.

8. The Preparation Method of the Coating-free Non-stick Pan According to Claim 7, It is **characterized in that** the mechanical rolling or pressing method is adopted, particularly with a mechanical rolling wheel, combined with multi-size hard particles. The particle size distribution includes at least two particle sizes (D50): 50±20 µm, 5±2 µm, and 0.2±0.1 µm (at least including 0.2±0.1 µm particles). A mixed slurry is prepared in a certain proportion, and the pressure of the rolling wheel is adjusted to roll the surface of the metal plate. The metal plate is processed into a pan body after rolling.

9. The Preparation Method of the Coating-free Non-stick Pan According to Claim 7, It is **characterized in that** each mechanical rolling wheel uses a narrow wheel to apply to the metal surface to be pressed, and each mechanical rolling wheel forms an indentation with a width of 10-30 cm. A number of mechanical rolling wheels arranged in sequence are used to press the entire width of the metal plate.

10. The Preparation Method of the Coating-free Non-stick Pan According to Claim 7, It is **characterized in that** the metal surface forms a micro-nano concave-convex (depression) structure with composite multi-size distribution, where the micron-scale concave-convex surface is superimposed with nano-scale concavities and convexities. The micron-scale ranges from 0.2 µm to 0.1 mm, and the nano-scale ranges from 10 nm to 200 nm.
